# EUROPÄISCHE PATENTSCHRIFT

(11) **EP 2 135 726 B1**
(45) Veröffentlichungstag und Bekanntmachung des Hinweises auf die Patenterteilung: **20.06.2012**
(21) Anmeldenummer: 09158158.7
(22) Anmeldetag: 17.04.2009
(51) Int. Cl.: B29C 49/56, B29C 49/36, B29C 49/78

(54) **Verfahren und Vorrichtung zum Einsetzen eines Vorformlings in und zur Entnahme einer Flasche aus einer Blasmaschine**
Method and device for inserting a preform in and removing a bottle from a blowing machine
Procédé et dispositif d'insertion d'une préforme dans et pour l'extraction d'une bouteille d'une souffleuse

(30) Priorität: 21.06.2008 DE 102008029531
(43) Veröffentlichungstag der Anmeldung: 23.12.2009
(73) Patentinhaber: KRONES Aktiengesellschaft, 93073 Neutraubling (DE)
(72) Erfinder: Philipp, Thomas, 93161, Eilsbrunn (DE); Blochmann, Erik, 93073, Neutraubling (DE); Stoiber, Christian, 93185, Michelsneukirchen (DE)
(74) Vertreter: Reichert, Werner Franz

(56) Entgegenhaltungen:
- EP-A1- 1 520 681
- DE-T2- 60 219 464
- FR-A1- 2 888 154
- GB-A- 805 834
- GB-A- 1 376 790
- GB-A- 2 225 274
- JP-A- 2004 299 130
- US-A1- 2008 143 022

## Beschreibung

Die vorliegende Erfindung betrifft ein Verfahren zum Einsetzen eines Vorformlings in und zur Entnahme einer Flasche aus einer Blasmaschine. Dabei besitzt die Blasmaschine eine Vielzahl an einem Transportmittel angeordnete, zweiteilige Formenträger. Die Formenträger können zur Entnahme der Flasche geöffnet und nach dem Einsetzen des Vorformlings wieder geschlossen werden.

Ferner betrifft die Erfindung eine Vorrichtung zum Einsetzen eines Vorformlings in und zur Entnahme einer Flasche aus einer Blasmaschine. Die Blasmaschine besitzt eine Vielzahl an einem Transportmittel angeordnete, zweiteilige Formenträger. Ein erster Teil des Formenträgers und ein zweiter Teil des Formenträgers sind um eine gemeinsame Achse schwenkbar miteinander verbunden.

Eine Blasmaschine wird insbesondere zum Streckblasen von Vorformlingen verwendet. Die Blasmaschine selbst umfasst dabei mindestens eine Blasform. Für das Streckblasen von Vorformlingen für Kunststoffflaschen werden Blasformen verwendet, in die ein Vorformling mit Überdruck im Innern der Blasform formgeblasen, d. h., auskonturiert wird. Die Blasform kann dabei z. B. zwei Formhälften umfassen, die um eine gemeinsame Achse drehbar gelagert sind. Durch Drehen um diese Achse können die Formhälften geöffnet und verschlossen werden, In die geöffneten Formhälften kann ein Vorformling eingesetzt bzw. eine formgeblasene Flasche entnommen werden. Die Ausgestaltung eines solchen Formträgers ist z. B. in der Europäischen Patentschrift EP 1 276 598 B1 offenbart.

Die europäische Patentanmeldung EP 1 520 681 A1, die U.S.-Patentanmeldung US 2008/0143022 A1 und die französische Patentanmeldung FR 2 888 154 A1 offenbaren ein Verfahren zum Einsetzen eines Vorformlings in und zur Entnahme einer Flasche aus einer Blasmaschine. Die Blasmaschine umfasst eine Vielzahl an einem Transportmittel angeordnete, mindestens zweiteilige Formenträger, der eine Symmetrieebene definiert. Die Formenträger werden zur Entnahme der Flansche geöffnet und nach dem Einsetzen des Vorformlings ebenso geschlossen. Die Formenträger werden mit dem Transportmittel gleichmäßig mit einer definierten Geschwindigkeit zu einer Stelle der Blasmaschine gedreht, an der das Entnehmen der Flasche und das Einsetzen des Vorformlings durchgeführt wird, Ein erster Teil des Formenträgers und ein zweiter Teil des Formenträgers werden bezüglich der Symmetrieebene ungleichmäßig bewegt.

GB 805 834 A, JP2004 299130 A, GB 1 376 790 A, GB 2 225 274 A, DE 602 19 464 T2 offenbaren weitere Verfahren und Vorrichtungen zum Einsetzen von Vorformlingen in und zur Entnahme von Artikeln aus einer Blasmaschine.

Das U.S.-Patent 4,313,720 offenbart ein System für die kontinuierliche Herstellung von Plastikflaschen, bei der vorgewärmte Vorformlinge in eine Blasform eingeblasen werden, um somit der gewünschten Flasche die entsprechende Form zu verleihen. Es ist eine Vielzahl von Speicherstationen für die Vorformlinge vorgesehen. Die Vorformlinge werden an eine drehbare Blasstation übergeben, die eine Vielzahl von Formenträgern trägt. Jede der Blasstationen besteht aus einem ersten Teil eines Formenträgers und einem zweiten Teil eines Formenträgers. An der Entnahmestation der Flasche kann der in Drehrichtung des Formenträgerrades angeordnete Teil des Formenträgers weggeschwenkt werden, um die Entnahme der fertigen Flasche zu erleichtern. Für das Einsetzen des Vorformlings in die leere Form wird der der Drehrichtung des Formenträgerrades nachlaufende Teil des Formenträgers weggeschwenkt und der Vorformling wird in den Teil des Formenträgers eingesetzt, der sich bereits wieder in der Position befindet, die dann für den geschlossenen Formenträger maßgeblich ist. Dem Stand der Technik kann nicht entnommen werden, wie die einzelnen Hälften des jeweiligen Formenträgers an der Entnahmestation, bzw. an der Einsetzstation bewegt werden, um ein schnelles und kollisionsfreies Einsetzen und Entnehmen zu gewährleisten.

Aufgabe der Erfindung ist, ein Verfahren zu schaffen, mit dem das Einsetzen eines Vorformlings in einen Formenträger der Blasmaschine und das Entnehmen einer fertigen Flasche aus der Blasmaschine erleichtert wird. Dabei sollen auch evtl. Beschädigung des Vorformlings, bzw. der fertigen Flasche an dem ersten Teil des Formenträgers, bzw. am zweiten Teil des Formenträgers vermieden werden.

Die obige Aufgabe wird gelöst durch ein Verfahren, dass die Merkmale des Anspruchs 1 umfasst.

Ferner ist es Aufgabe der gegenwärtigen Erfindung eine Vorrichtung zu schaffen, mit der es möglich ist, auf einfache Weise aus dem Formenträger einer Blasmaschine zu Entnehmen und ein Vorformling in den entsprechenden Formenträger einer Blasmaschine einzusetzen. Dabei sollen evtl. Beschädigungen bei der Entnahme, bzw. dem Einsetzen vermieden werden.

Die obige Aufgabe wird durch eine Vorrichtung gelöst, die die Merkmale des Anspruchs 7 umfasst.

Das Verfahren zum Einsetzen eines Vorformlings in und zur Entnahme einer Flasche aus einer Blasmaschine ist von besonderem Vorteil, da mit einem Transportmittel die Formenträger gleichmäßig mit einer definierten Geschwindigkeit zu einer Stelle der Blasmaschine gedreht werden, an der das Entnehmen der Flasche und das Einsetzen des Vorformlings durchgeführt wird. Der Formenträger ist dabei aus einem ersten Teil und einem zweiten Teil aufgebaut, und definiert eine Symmetrieebene. Der erste Teil des Formenträgers und der zweite Teil des Formenträgers werden bezüglich der Symmetrieebene (S) ungleichmäßig bewegt.

Der erste Teil des Formenträgers und der zweite Teil des Formenträgers werden durch jeweils ein Betätigungsmittel angesteuert. Eine weitere Möglichkeit ist, dass der erste Teil des Formenträgers und der zweite Teil des Formenträgers durch ein gemeinsames Betätigungsmittel angesteuert werden. In diesem Fall ist das gemeinsame Betätigungsmittel zweigeteilt, wobei ein erster Teil die Öffnungs- und Schließbewegung des ersten Teils des Formenträgers und des zweiten Teils des Formenträgers steuert und ein zweiter Teil die ungleichmäßige Bewegung bezüglich der Symmetrieebene steuert.

Das Entnehmen der Flasche und das Einsetzen des Vorformlings wird in mehrere Phasen unterteilt. Dabei erreicht die Schwenkbewegung des ersten Teil des Vorformlings in Transportrichtung des Transportmittels in einer Phase die größte Geschwindigkeit, die vor derjenigen Phase liegt, in der der zweite Teil des Formenträgers in Transportrichtung des Transportmittels ebenfalls die größte Geschwindigkeit erreicht.

In einer besonders bevorzugten Ausführungsform ist das Transportmittel als Rad ausgebildet, an dessen Umfang die Vielzahl der Formenträger angeordnet sind.

Ein durch die Schwenkbewegung des ersten Teils des Formenträgers bedingter erster Öffnungswinkel stellt in Abhängigkeit vom Drehwinkel des Rades eine stetig differenzierbare Funktion dar. Ebenso stellt die Schwenkbewegung des zweiten Teils des Formenträgers in Bezug auf einen zweiten Öffnungswinkel ebenfalls eine stetig differenzierbare Funktion des Drehwinkels des Rades dar. Die Maxima der beiden Funktionen sind gegeneinander in Abhängigkeit vom Drehwinkel des Rades versetzt.

Der erste Teil und der zweite Teil des gemeinsamen Betätigungsmittels ist eine Kurvenscheibe, durch die der erste Teil des Formenträgers und der zweite Teil des Formenträgers in eine Schwenkbewegung versetzt werden. Ebenso ist es denkbar, dass das Betätigungsmittel als ein hydraulisches Mittel ausgebildet ist. Dabei kann sowohl dem ersten Teil des Formenträgers, als auch dem zweiten Teil des Formenträgers jeweils ein hydraulisches Mittel zugeordnet sein. Ebenso kann man das Betätigungsmittel als einen Elektromotor ausbilden. Mit der individuellen Zuordnung der Betätigungsmittel zum ersten Teil des Formenträgers und zum zweiten Teil des Formenträgers kann man je nach Ausgestaltung des Betätigungsmittels eine beliebige Bewegungskurve des ersten Teils des Formenträgers, bzw. des zweiten Teils des Formenträgers fahren, um dadurch optimale Bedingungen für das Einsetzen eines Vorformlings in einem Teil des Formenträgers und das Entnehmen einer fertigen Flasche aus dem geöffneten Formenträger zu erzielen. Für die Entnahme der fertigen Flasche aus dem Formenträger und das Einsetzen des Vorformlings in den Formenträger ist es nicht unbedingt erforderlich, dass das erste Teil des Formenträgers und der zweite Teil des Formenträgers die maximal mögliche Schwenkbewegung durchgeführt haben. Durch die Erfindung ist es möglich, den ersten Teil des Formenträgers, bzw. den zweiten Teil des Formenträgers soweit zu schwenken, dass damit eine optimale Entnahme unter Berücksichtigung der Bewegung des Transportmittels möglich ist.

Der Vorteil der erfindungsgemäßen Vorrichtung ist, dass dem ersten Teil des Formenträgers und dem zweiten Teil des Formenträgers jeweils ein Betätigungsmittel zugeordnet ist. Jedes Betätigungsmittel kann somit unabhängig voneinander den ersten Teil des Formenträgers und den zweiten Teil des Formenträgers um die gemeinsame Achse schwenken. Ebenso ist es denkbar, dass sowohl der erste Teil des Formenträgers als auch der zweite Teil des Formenträgers jeweils eine Schwenkachse besitzt.

Die mit den einzelnen Betätigungsmitteln dem ersten Teil des Formenträgers und dem zweiten Teil des Formenträgers aufgeprägten Bewegungskurven, bzw. Schwenkbewegungen stellen jeweils in Abhängigkeit vom Drehwinkel des Rades, an dem die Formenträger angeordnet sind, eine stetig differenzierbare Funktion dar. Dies bedeutet, dass über den gesamten Verlauf der Schwenkbewegung kein abruptes Abstoppen der Schwenkbewegung des ersten Teils des Formenträgers, bzw. des zweiten Teils des Formenträgers stattfindet.

Im Folgenden sollen Ausführungsbeispiele die Erfindung und ihre Vorteile anhand der beigefügten Figuren näher erläutern.
Figur 1 zeigt eine schematische Darstellung einer Blasmaschine, die mit einem Ofen verbunden ist, der der Blasmaschine die Vorformlinge mit einer definierten Temperatur zuführt.
Figur 2 zeigt die schematische Anordnung eines Formenträgers, wobei für die Betätigung des ersten Teils des Formenträgers und die Betätigung des zweiten Teils des Formenträgers ein gemeinsames Betätigungsmittel vorgesehen ist.
Figur 3 zeigt eine weitere Ausführungsform, bei der im ersten Teil des Formenträgers und im zweiten Teil des Formenträgers jeweils eine Kurvenscheibe zugeordnet ist.
Figur 4a zeigt die Schwenkbewegung des ersten Teils des Formenträgers und des zweiten Teils des Formenträgers unter Einwirkung des Betätigungsmittels.
Figur 4b zeigt schematisch die Darstellung und die jeweilige Öffnungssituation des Formenträgers in Abhängigkeit der Position des Formenträgers am Rad, an welchem die Vielzahl der Formenträger angeordnet ist.
Figur 5 zeigt ebenfalls die unterschiedlichen Phasen der Öffnung des Formenträgers, wobei die Öffnungssituation des Formenträgers ebenfalls graphisch in Abhängigkeit vom Drehwinkel Omega des Rades dargestellt ist.
Figur 6a zeigt eine erste Ausführungsform der Schwenkbewegung des ersten Teils des Formenträgers und des zweiten Teils des Formenträgers in Abhängigkeit vom Drehwinkel des Rades.
Figur 6b zeigt eine zweite Ausführungsform der Schwenkbewegung des ersten Teils des Formenträgers und des zweiten Teils des Formenträgers in Abhängigkeit vom Drehwinkel des Rades.
Figur 6c zeigt eine dritte Ausführungsform der Schwenkbewegung des ersten Teils des Formenträgers und des zweiten Teils des Formenträgers in Abhängigkeit vom Drehwinkel des Rades.
Figur 6d zeigt eine vierte Ausführungsform der Schwenkbewegung des ersten Teils des Formenträgers und des zweiten Teils des Formenträgers in Abhängigkeit von der Position des Rades.

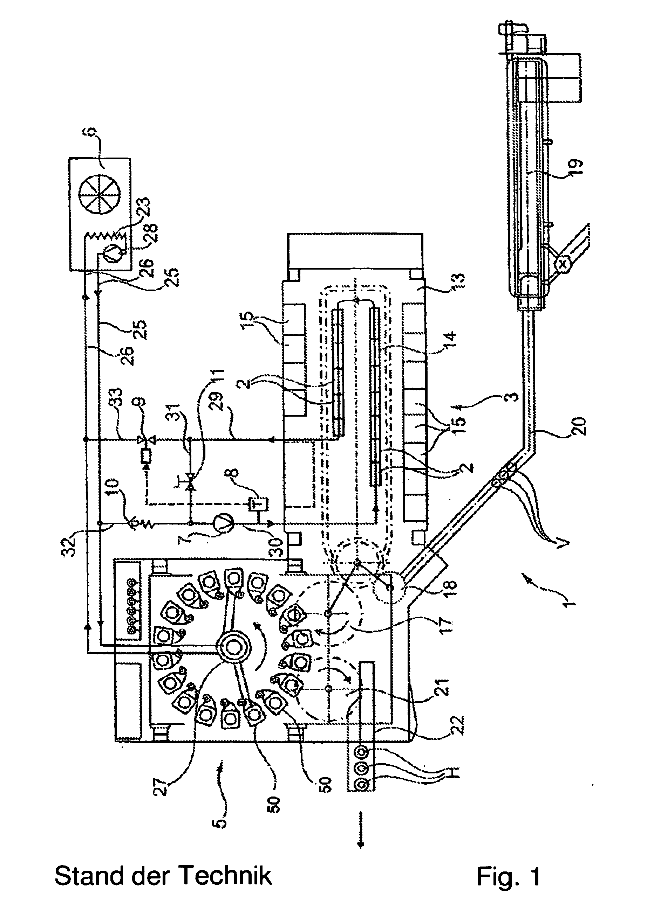

Figur 1 zeigt eine Streckblasmaschine 1, wie sie aus dem Stand der Technik bekannt ist. Die Streckblasmaschine 1 soll der Vollständigkeit halber beschrieben werden, um das Einsetzen von Vorformlingen V in einen Formenträger 50[] und das Entnehmen einer Flasche H aus dem Formenträger 50[] besser verstehen zu können. Die Streckblasmaschine 1 besitzt eine Blasmaschine 5 in Form eines mit mehreren gekühlten Formenträgern 50[] bestückten Blasrades. Das Blasrad wird in Pfeilrichtung kontinuierlich angetrieben. Dem Blasrad ist eine Heizstation 3 vorgeschaltet, die in Form eines Linearofens ausgestaltet ist und eine in Pfeilrichtung kontinuierlich umlaufende Transportkette 14 für die Vorformlinge V aufweist. In der Heizstation 3 werden die Vorformlinge V mit Infrarot-Heizstrahlern 15 auf die für die Verarbeitung in der Blasstation 5 erforderliche Temperatur gebracht.

Zwischen der Transportkette 14 und den geöffneten Blasformen der Formenträger 50[] werden die auf eine Verarbeitungstemperatur von beispielsweise 125 ° C erwärmten Vorformlinge V durch ein in Pfeilrichtung kontinuierlich rotierendes Transferrad 17 überführt. Die Zufuhr der Vorformlinge V zur Transportkette erfolgt durch ein in Pfeilrichtung kontinuierlich umlaufendes Einlaufsternrad 18. Dieses erhält die Vorformlinge V[] von einem Walzensortierer 19 und einer nach unten geneigten Rutsche 20. Die in den geschlossenen Blasformen nach mechanischer Vorstreckung durch nicht gezeigte Reckstangen und durch Zufuhr von Druckluft fertig geblasenen und an den gekühlten Wänden der Formenträger 50[] befestigten flaschenförmigen Hohlkörper H werden durch ein in Pfeilrichtung kontinuierlich umlaufendes Auslaufsternrad 21 aus den geöffneten Formenträgern 50[] entnommen und an einen Abförderer 22 übergeben. Die Streckblasmaschine 1 umfasst weiter ein Kühlaggregat 6 mit einem Wärmetauscher 23 und einer Umwälzpumpe 16 zur Lieferung von Kühlflüssigkeit, in Form von Kühlwasser. An den Wärmetauscher 23 ist die Blasstation 5 über eine Zulaufleitung 25 und eine Rücklaufleitung 26, sowie einen Drehverteiler 27 direkt angeschlossen. Das Kühlwasser zirkuliert durch den ersten Teil des Formenträgers 50 und den zweiten Teil des Formenträgers 50 und kühlt die gewünschten Bereiche. Dies ist durch einige radiale Leitungen angedeutet. Die Heizstation 3 weist ebenfalls einen eigenen Kühlflüssigkeitskreislauf mit Leitungen 29, 30, 31 und einer Umwälzpumpe 7 auf, in dem eine Reihe von stationären Kühlkörpern 2 hintereinander geschaltet ist. Die Kühlkörper 2 sind z. B. auf Höhe des Tragrings der Vorformlinge V angeordnet und schützen den Gewindekopf gegen übermäßige Erwärmung, da dieser an der nachfolgenden Streck-Blasverformung nicht teilnimmt. Die Kühlkörper 2 können an einer Seite oder an beiden Seiten der Bewegungsbahn der Vorformlinge V in der Heizstation 3 angeordnet sein. Weitere Kühlkörper können für die Heizstrahler 15 und deren Reflektoren vorgesehen sein.

Der Kühlwasserkreislauf der Heizstation 3 ist im Bereich zwischen Rückflußverhinderer 11 und Umwälzpumpe 7 durch eine weitere Leitung 32 mit dem Rückschlagventil an die vom Kühlaggregat 6 kommende Zulaufleitung 35 und im Bereich zwischen dem Rückflußverhinderer 11 und dem Kühlkörper 2 durch eine weitere Leitung mit einem Regelventil 9 an die zum Kühlaggregat 6 führende Rücklaufleitung 26 angeschlossen. Das Regelventil 9 wird durch einen Temperaturregler 8 gesteuert, der in den Kühlflüssigkeitskreislauf der Heizstation 3 eingefügt ist, vorzugsweise im Bereich zwischen der Umwälzpumpe 7 und dem Kühlkörper 2.

In der nachfolgenden Beschreibung sei darauf hingewiesen, dass in den verschiedenen Figuren für gleiche Elemente die gleichen Bezugszeichen verwendet werden.

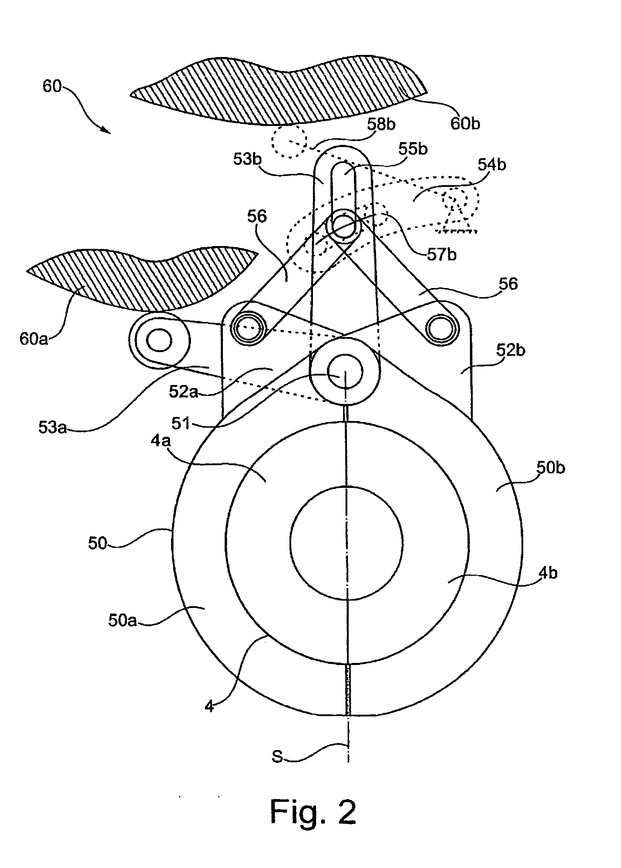

**Figur 2** zeigt eine schematische Ansicht eines Formenträgers 50, in dem eine Blasform 4 eingesetzt ist. Der Formenträger 50 besteht aus einem ersten Teil 50a und einem zweiten Teil 50b. Ebenso besteht die Blasform aus einem ersten Teil 4a und einem zweiten Teil 4b. Der erste Teil des Formenträgers 50a und der zweite Teil des Formenträgers 50b sind um eine gemeinsame Achse 51 schwenkbar. Durch das Schwenken um die Achse 51 wird erreicht, dass der erste Teil des Formenträgers 50a und der zweite Teil des Formenträgers 50b geöffnet werden, damit ein Vorformling V (siehe Figur 1) in den Formenträger 50 bzw. in die Blasform 4 eingesetzt werden kann. Ebenso kann eine fertige Flasche H (siehe Figur 1) durch das Öffnen des Formenträgers 50 aus der Blasform 4 entnommen werden.

Es ist ein gemeinsames Betätigungsmittel 60 vorgesehen, das den ersten Teil des Formenträgers 50a und den zweiten Teil des Formenträgers 50b bezüglich der Symmetrieebene S ungleichmäßig bewegt. In der hier gezeigten Ausführungsform ist das Betätigungsmittel 60 zweigeteilt. Der erste Teil des Formenträgers 50a ist mit einer Lasche 52a verbunden, an die ein Hebelarm 56 angreift, der in einem Schlitz 57b des Hebelarms 54b geführt ist. Ebenso ist der erste Teil des Formenträgers 50a mit einem Betätigungshebel 53a verbunden, der direkt mit dem ersten Betätigungsmittel 60a zusammen wirkt. In der hier dargestellten Ausführungsform ist das erste Betätigungsmittel 60a als eine Kurvenscheibe dargestellt. Die Ausführung des ersten Betätigungsmittels 60a und des zweiten Betätigungsmittels 60b als Kurvenscheiben soll nicht als eine Beschränkung der Erfindung aufgefasst werden. Es ist für einen Fachmann selbstverständlich, dass die entsprechenden Hebel, wie in **Figur 2** dargestellt, auch mit anderen Betätigungsmitteln betätigt werden können. Als mögliche Betätigungsmittel kann man sich hydraulische

Betätigungsmittel oder Servomotoren vorstellen, die direkt an die vorgesehenen Hebel angreifen.

Der zweite Teil des Formenträgers 50b ist ebenfalls mit einer Lasche 52b versehen, an die ebenfalls ein Hebel 56 angelenkt ist, der ebenfalls in der Führung 57b des Hebels 54b geführt ist. An den Hebel 54b greift ein Hebelsystem 58b an, das mit dem zweiten Betätigungsmittel 60b zusammenwirkt. Durch die Bewegung des ersten und des zweiten Betätigungsmittels 60a und 60b wird somit eine entsprechende Auslenkung auf die Hebel 53a, bzw. 58b und 54b ausgeübt, was letztendlich zu einer individuellen Bewegung des ersten Teils des Formenträgers 50a und des zweiten Teils des Formenträgers 50b führt. Durch die individuelle Anlenkung bzw. individuelle Betätigung des ersten Teils des Formenträgers 50a und des zweiten Teils des Formenträgers 50b kann somit eine beliebige Bewegungskurve der beiden Teile des Formenträgers 50a und 50b erreicht werden.

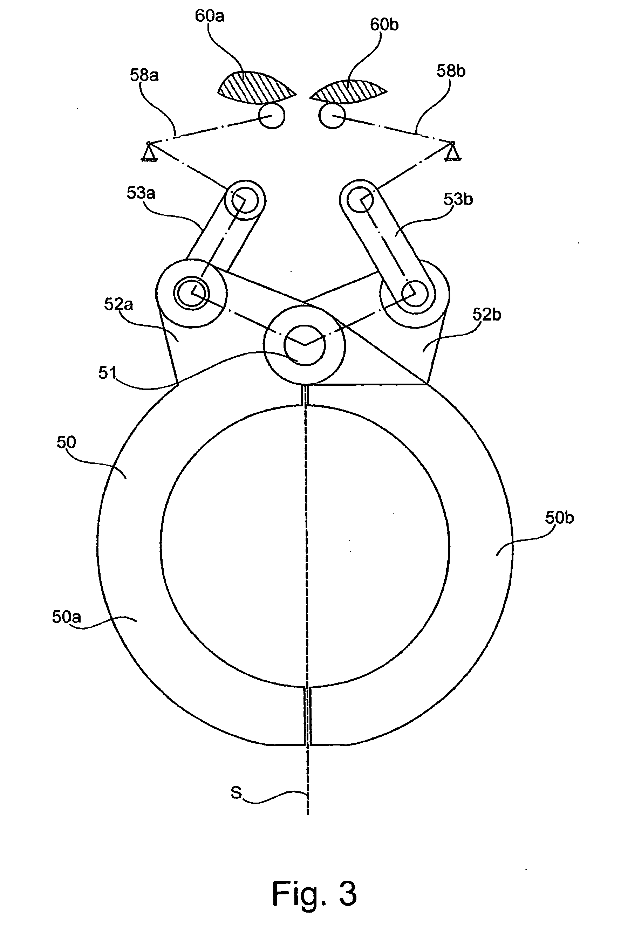

**Figur 3** zeigt eine weitere Ausführungsform für das Öffnen und Schließen eines Formenträgers 50. Wie bereits in dem Ausführungsbeispiel zu **Figur 2** beschrieben, umfasst der Formenträger 50 einen ersten Teil des Formenträgers 50a und einen zweiten Teil des Formenträgers 50b, die beide um eine gemeinsame Achse 51 schwenkbar angebracht sind. Im ersten Teil des Formenträgers 50a ist eine Lasche 52a angebracht. Ebenso ist am zweiten Teil des Formenträgers 50b eine Lasche 52b angebracht. An beiden Laschen 52a und 52b sind jeweils Hebelelemente 53a, bzw. 53b angelenkt. Über ein dem ersten Teil des Formenträgers 50a und dem zweiten Teil des Formenträgers 50b zugeordnetes Hebelsystem 58a, bzw. 58b können der erste Teil des Formenträgers 50a und der zweite Teil des Formenträgers 50b unabhängig voneinander um die gemeinsame Achse 51 geschwenkt werden. Die Schwenkung wird wie bereits in **Figur 2a** beschrieben, mittels eines entsprechend dem ersten Teil des Formenträgers 50a und dem zweiten Teil des Formenträgers 50b zugeordneten ersten und zweiten Betätigungsmittels 60a, bzw. 60b durchgeführt. Je nach Ausgestaltung der am ersten bzw. zweiten Betätigungsmittel 60a und 60b angebrachten Kurven kann eine beliebige Bewegungskurve des ersten Teils des Formenträgers 50a und des zweiten Teils des Formenträgers 50b realisiert werden.

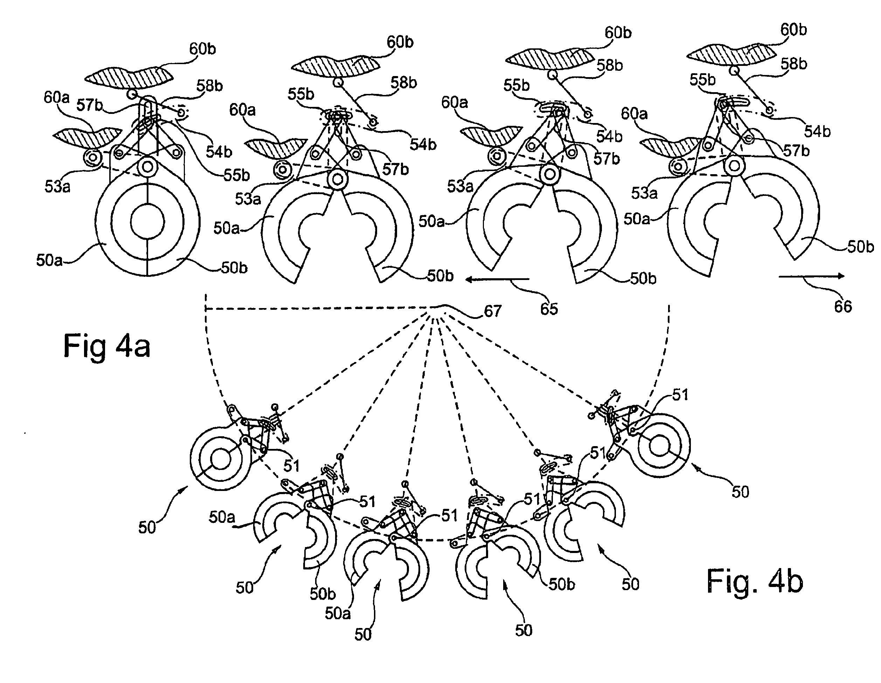

**Figur 4a** zeigt verschiedene Stellungen der Öffnung des ersten Teils des Formenträgers 50a und des zweiten Teils des Formenträgers 50b. Einer ersten Darstellung der **Figur 4a** sind die beiden Teile des Formenträgers 50a und 50b geschlossen. Die Betätigungsmittel 60a und 60b sind in mechanischem Kontakt mit dem Hebel 53 a und dem Hebelsystem 58b. Die Verbindungsstelle zu der ersten Lasche und der zweiten Lasche des ersten Teils des Formenträgers 50a und des zweiten Teils des Formenträgers 50b sind dabei in der Mitte der Führung 55b des Hebels 54b und am unteren Teil der Führung 57b. Bei der nächsten in Figur 4a gezeigten Stellung sind der erste Teil des Formenträgers und der zweite Teil des Formenträgers 50a und 50b gleichmäßig geöffnet. Hierzu befindet sich die Verbindungsstelle zu der ersten Lasche und der zweiten Lasche am oberen Teil der Führung 57b und etwa in der Mitte der Führung 55b des Hebels 54b. In der nächsten Darstellung der Figur 4a liegt die Verbindungsstelle zu den beiden Laschen des ersten Teils des Formenträgers und des zweiten Teils des Formenträgers 50a und 50b am rechten Rand der Führung 55b des Hebels 54b an. Dadurch erreicht man eine weitere Schwenkbewegung des ersten Teils des Formenträgers 50a in Richtung des Pfeils 65. In der letzten Darstellung der Figur 4a liegt die Verbindungsstelle zu den beiden Laschen des ersten Teils des Formenträgers und des zweiten Teils des Formenträgers 50a und 50b links an der Führung 55b des Hebels 54b an. Dadurch wird erreicht, dass der zweite Teil des Formenträgers 50b weiter in Richtung des Pfeils 66 schwenkt.

Figur 4b zeigt schematisch das Öffnen und das Schließen des Formenträgers 50 in Abhängigkeit von der Stellung des Transportmittels. In der hier dargestellten Ausführungsform ist das Transportmittel als Rad dargestellt, welches sich um einen Mittelpunkt 67 dreht. In Abhängigkeit von der Drehstellung des Rades werden die Formenträger in entsprechender Weise geöffnet. Das Rad ist in der hier gezeigten Darstellung gestrichelt eingezeichnet. Die Achsen 51, um welche die Formenträger 50 geschwenkt werden können, liegen im Wesentlichen auf dem Umfang des Rades. In Figur 4b sind im Wesentlichen sechs Phasen dargestellt, die der Formenträger 50 durchläuft und dabei geöffnet wird, eine der beiden Formenhälften weiter geöffnet wird in Drehrichtung des Rades oder in entgegen gesetzter Drehrichtung des Rades und wobei der Formenträger 50 letztendlich wieder geschlossen wird. Die Drehrichtung des Rades erfolgt dabei um den Mittelpunkt 67 im Gegenuhrzeigersinn. Zunächst werden die beiden Teile des Formenträgers 50a und 50b in Drehrichtung des Rades gleichmäßig geöffnet. Wenn sich das Rad weiterdreht, wird der erste Formenträger etwas weiter entgegen der Drehrichtung des Rades geöffnet. Bei einer Weiterdrehung des Rades wird dann der zweite Teil des Formenträgers 50b etwas weiter in Drehrichtung des Rades geöffnet. Kurz vor dem Schließen der beiden Teile des Formenträgers 50a und 50b sind beide Teile des Formenträgers 50a und 50b wieder gleichmäßig geöffnet. Letztendlich werden bei einer Weiterdrehung des Rades beide Teile des Formenträgers 50a und 50b wieder geschlossen.

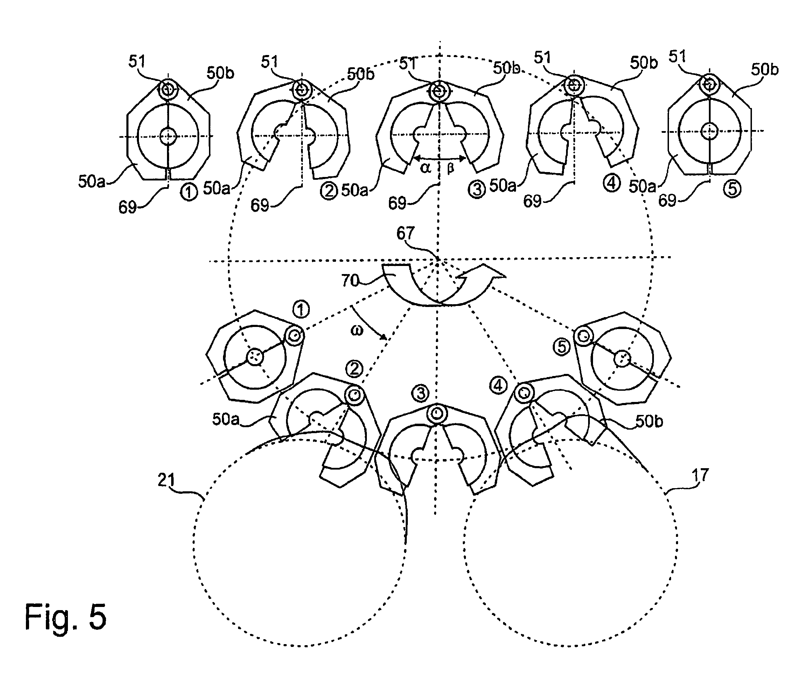

Figur 5b stellt fünf Phasen dar für das Öffnen des Formenträgers 50. Zusätzlich ist in der Figur 5 ebenfalls die Stellung der einzelnen Formenträger in Abhängigkeit von der Drehstellung des Rades dargestellt. Dabei ist ebenfalls das Zusammenwirken des geöffneten Formenträgers 50 mit einem Auslaufsternrad 21, welches die fertigen Flüssigkeitsbehälter übernimmt. Ebenso ist das Zusammenwirken des Formenträgers 50 mit einem Transferstemrad 17 dargestellt, das die vorgewärmten Vorformlinge (V) an den zweiten Teil des Formenträgers 50b übergibt. Die einzelnen Phasen sind in Figur 5 mit einem Kreis, in dem eine Zahl eingezeichnet ist, gekennzeichnet. In der ersten Phase sind die beiden Teile des Formenträgers 50a und 50b geschlossen. Dies ist sowohl in der linearen Darstellung, als auch in der Darstellung der einzelnen Formenträger auf dem Blasrad so eingezeichnet. Ebenso ist in der linearen Darstellung der einzelnen Phasen ein gestricheltes Kreuz eingezeichnet, wobei eine Achse 69 des Kreuzes durch die Achse 51 des Formenträgers 50 verläuft. Mit Hilfe dieser Achse 69 kann man einfach die einzelnen Ausmaße der Schwenkbewegung des ersten Teils des Formenträgers oder des zweiten Teils des Formenträgers 50a oder 50b ermitteln.

Indem sich das Blasrad um den Mittelpunkt 67 um einen Winkel Omega in Richtung des Pfeils 70 gedreht hat, ist der Formenträger 50 geöffnet, d. h. der erste Teil des Formenträgers und der zweite Teil des Formenträgers 50a und 50b sind jeweils um einen gewissen Betrag um die Achse 51a geschwenkt worden. Wie aus der Darstellung der Phase 2 in Figur 5 ersichtlich ist, wurde der erste Teil des Formenträgers 50a etwas weiter entgegen der Drehrichtung 70 des Blasrades geschwenkt. Wie auch in Figur 5 dargestellt, erfolgt bei der Phase 2 das Entnehmen der fertig geblasenen Flaschen aus dem geöffneten Formenträger. Dabei wirkt der geöffnete Formenträger in Phase 2 mit dem Auslaufsternrad 21 zusammen. Am Auslaufsternrad 21 sind entsprechende Entnahmemittel (nicht dargestellt) vorgesehen, die die Flasche vom ersten Teil des Formenträgers 50a entnehmen. Das Blasrad dreht sich kontinuierlich weiter und erreicht nach einem weiteren Winkel Omega die Phase 3. Hier sind der erste Teil des Formenträgers und der zweite Teil des Formenträgers 50a und 50b um den gleichen Winkel bzgl. der Achse 69 geöffnet. Bei der vierten Phase beginnt sich bereits der erste Teil des Formenträgers 50a wieder zu schließen und der zweite Teil des Formenträger 50b schwenkt sich ggf. noch etwas weiter auf. Bei der dritten Phase wirkt der Formenträger 50 mit dem Transferrad 17 für die Vorformlinge zusammen. Das Transferrad 17 führt somit einen Vorformling dem zweiten Teil des Formenträgers 50b zu. Nachdem der Vorformling durch das Transferrad 17 an den zweiten Teil des Formenträgers 50b übergeben wurde, wird dieser geschlossen. Der Formenträger ist dann komplett geschlossen, wenn das Blasrad die Phase 5 erreicht hat.

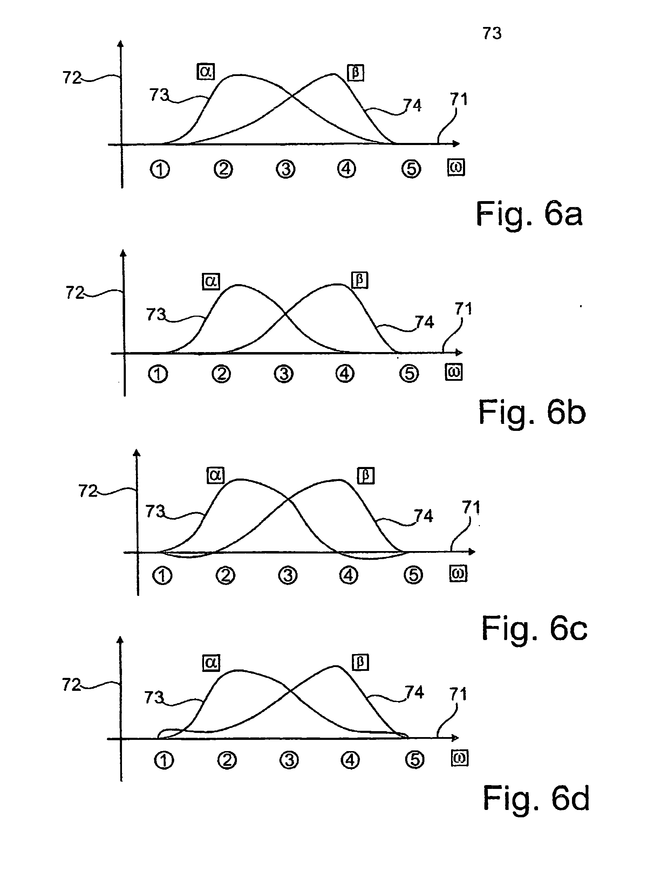

Die Figuren 6a bis 6d zeigen verschiedene Möglichkeiten, wie die einzelnen Schwenkbewegungen des ersten Teils des Formenträgers und des zweiten Teils des Formenträgers zusammengesetzt sein können, während ein Formenträger die Phasen 1 bis 5 bei der Drehung eines Blasrades um den Winkel Omega durchläuft. Dabei ist in allen Figuren auf der Abszisse 71 der Drehwinkel Omega des Blasrades aufgetragen. Auf der Ordinate 72 ist der Öffnungswinkel des ersten Teils des Formenträgers und des zweiten Teils des Formenträgers 50a und 50b aufgetragen. Wie aus allen Figuren 6a bis 6d ersichtlich ist, ist die Funktion 73 des Öffnungswinkels α des ersten Teils des Formenträgers 50a und die Funktion 74 des Öffnungswinkels β des zweiten Teils des Formenträgers 50b eine stetig differenzierbare Funktion. In Figur 6b ist ersichtlich, dass sich der erste Teil des Formenträgers 50a schneller öffnet und der zweite Teil des Formenträgers 50b sich erst später in Abhängigkeit vom Drehwinkel des Blasrades öffnet. Die maximalen Öffnungswinkel sind bei allen Figuren 6a bis 6d zu unterschiedlichen Zeitpunkten erreicht. In der hier dargestellten Ausführungsform wird der maximale Öffnungswinkel des ersten Teils des Formenträgers 50a bereits um die Phase 2 erreicht. Der maximale Öffnungswinkel des zweiten Teils des Formenträgers 50b wird etwa bei Phase 4 erreicht. Figur 6c zeigt eine weitere Ausführungsform des Öffnens und des Schließens des ersten Teils des Formenträgers und des zweiten Teils des Formenträgers 50a und 50b. Zwischen der ersten und der zweiten Phase der Drehbewegung des Blasrades bewegt sich der zweite Teil des Formenträgers 50b etwas entgegen der Drehrichtung des Blasrades. Ebenso bewegt sich zwischen der vierten Phase und der fünften Phase der erste Teil des Formenträgers 50a etwas entgegen der Drehrichtung des Blasrades. Eine weitere Ausführungsform des Öffnens und des Schließens des Formenträgers 50 ist in Figur 6b dargestellt. Hier bewegt sich zunächst zwischen der ersten und der zweiten Phase der zweite Teil des Formenträgers 50b etwas in Richtung der Drehrichtung des Blasrades. Es stellt sich somit ein kleiner Öffnungswinkel Beta des zweiten Teils des Blasrades 50b ein, welcher zwischen der ersten und der zweiten Phase im Wesentlichen konstant bleibt. Ebenso stellt sich zwischen der vierten und fünften Phase ein kleiner Öffnungswinkel Alpha des ersten Teils des Formenträgers 50a ein.

Ebenso bleibt zwischen der vierten und fünften Phase dieser kleine Öffnungswinkel konstant. Erst in der Phase 4 sind dann beide Teile des Formenträgers 50a und 50b wieder geschlossen. Die in Figur 6a bis 6d dargestellten Bewegungskurven der Teile des Formenträgers 50a und 50b stellen lediglich eine Auswahl von vielen Möglichkeiten dar. - Dies sollen ebenfalls nicht als eine Beschränkung der Erfindung aufgefasst werden. Es ist für einen Fachmann selbstverständlich, dass man die Steuerung der Betätigungsmittel des ersten Teils des Formenträgers und des zweiten Teils des Formenträgers 50a und 50b in entsprechender Weise wählen kann, um vom Benutzer gewünschte Bewegungskurven der einzelnen Teile des Formenträgers 50a und 50b zu realisieren, damit ein möglichst einfaches und beschädigungsfreies Entnehmen der fertig geblasenen Flaschen aus den Formenträger und das Einsetzen eines Vorformlings in den Formenträger erleichtert ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Verfahren zum Einsetzen eines Vorformlings (V) in und zur Entnahme einer Flasche (H) aus einer Blasmaschine (5), wobei die Blasmaschine (5) eine Vielzahl, an einem Transportmittel angeordnete, mindestens zweiteilige Formenträger (50) umfasst, der eine Symmetrieebene (S) definiert, wobei die Formenträger (50) zur Entnahme der Flasche (H) geöffnet und nach dem Einsetzen des Vorformlings (V) ebenso geschlossen werden, mit den folgenden Schritten:
■ dass die Formenträger (50) mit dem Transportmittel gleichmäßig mit einer definierten Geschwindigkeit zu einer Stelle der Blasmaschine (5) gedreht werden, an der das Entnehmen der Flasche (H) und das Einsetzen des Vorformlings (V) durchgeführt wird; und
■ dass ein erster Teil des Formenträgers (50a) und ein zweiter Teil des Formenträgers (50b) bezüglich der Symmetrieebene (S) ungleichmäßig bewegt werden;
**gekennzeichnet durch** den folgenden Schritt:
■ dass das Entnehmen der Flasche (H) und das Einsetzen des Vorformlings (V) in mehrere Phasen unterteilt wird, wobei die größte Geschwindigkeit der Schwenkbewegung des ersten Teils des Formenträgers (50a) in Transportrichtung (70) des Transportmittels in einer Phase erreicht wird, die vor derjenigen Phase liegt, in der der zweite Teil des Formenträgers (50b) die größte Geschwindigkeit in Transportrichtung (70) des Transportmittels erreicht.

2. Verfahren nach Anspruch 1, wobei der erste Teil des Formenträgers (50a) und der zweite Teil des Formenträgers (50b) durch jeweils ein Betätigungsmittel (60a, 60b) angesteuert werden.

3. Verfahren nach Anspruch 1, wobei der erste Teil des Formenträgers (50a) und der zweite Teil des Formenträgers (50b) durch ein gemeinsames Betätigungsmittel (60) angesteuert werden.

4. Verfahren nach Anspruch 3, wobei das gemeinsame Betätigungsmittel (60) zweigeteilt ist, wobei ein erster Teil (60b) die Öffnungs- und Schließbewegung des ersten Teils des Formenträgers (50a) und des zweiten Teils des Formenträgers (50b) steuert und ein zweiter Teil (60a) die ungleichmäßige Bewegung bezüglich der Symmetrieebene (S) steuert.

5. Verfahren nach Anspruch 1, wobei das Transportmittel ein Rad ist, an dessen Umfang die Vielzahl der Formenträger (50) angeordnet ist, wobei ein durch die Schwenkbewegung des ersten Teils des Formenträgers (50a) bedingter erster Öffnungswinkel (α) eine stetig differenzierbare Funktion (73) eines Drehwinkels (w) des Rades ist, ein durch die Schwenkbewegung des zweiten Teils des Formenträgers (50b) bedingter zweiter Öffnungswinkel (β) eine stetig differenzierbare Funktion (74) des Drehwinkels (w) des Rades ist, und die Maxima der beiden Funktionen (73, 74) gegeneinander in Abhängigkeit vom Drehwinkel (w) des Rades versetzt sind.

6. Vorrichtung zum Einsetzen eines Vorformlings (V) in und zur Entnahme einer Flasche (H) aus einer Blasmaschine (5), wobei die Blasmaschine (5) eine Vielzahl an einem Transportmittel angeordnete, zweiteilige Formenträger (50) umfasst, der eine Symmetrieebene (S) definiert, wobei ein erster Teil des Formenträgers (50a) und ein zweiter Teil des Formenträgers (50b) eine scherenartige Bewegung zum Öffnen und/oder Schließen ausführen, und dem ersten Teil des Formenträgers (50a) und dem zweiten Teil des Formenträgers (50b) mindestens ein Betätigungsmittel (60, 60a, 60b) zugeordnet ist, das den ersten Teil des Formenträgers (50a) und den zweiten Teil des Formenträgers (50b) bezüglich der Symmetrieebene (S) ungleichmäßig bewegt,
**dadurch gekennzeichnet, dass**
das mindestens eine Betätigungsmittel (60, 60a, 60b) derart ausgestaltet ist, dass der erste Teil des Formenträgers (50a) und der zweite Teil des Formenträgers (50b) individuell bewegbar sind,
so dass das Entnehmen der Flasche (H) und das Einsetzen des Vorformlings (V) in mehrere Phasen unterteilt wird, wobei die größte Geschwindigkeit der Schwenkbewegung des ersten Teils des Formenträgers (50a) in Transportrichtung (70) des Transportmittels in einer Phase erreicht wird, die vor derjenigen Phase liegt, in der der zweite Teil des Formenträgers (50b) die größte Geschwindigkeit in Transportrichtung (70) des Transportmittels erreicht.

7. Vorrichtung nach Anspruch 6, wobei dem ersten Teil des Formenträgers (50a) und dem zweiten Teil des Formenträgers (50b) ein gemeinsames Betätigungsmittel (60) zugeordnet ist, das den ersten Teil des Formenträgers (50a) und den zweiten Teil des Formenträgers (50b) bezüglich der Symmetrieebene (S) ungleichmäßig bewegt.

8. Vorrichtung nach Anspruch 7, wobei der erste Teil des Formenträgers (50a) und der zweite Teil des Formenträgers (50b) jeweils mit einem Betätigungsmittel (60a, 60b) gekoppelt sind.

9. Vorrichtung nach Anspruch 7, wobei dem ersten Teil des Formenträgers (50a) und dem zweiten Teil des Formenträgers (50b) ein gemeinsames Betätigungsmittel (60) zugeordnet ist.

10. Vorrichtung nach Anspruch 9, wobei das gemeinsame Betätigungsmittel (60) zweigeteilt ist, wobei ein erster Teil (60b) die Öffnungs- und Schließbewegung des ersten Teils des Formenträgers (50a) und des zweiten Teils des Formenträgers (50b) steuert und ein zweiter Teil (60a) die ungleichmäßige Bewegung bezüglich der Symmetrieebene (S) steuert.

11. Vorrichtung nach Anspruch 7, wobei das Transportmittel ein Rad ist, an dessen Umfang die Vielzahl der Formenträger (4,50) angeordnet ist, wobei ein durch die Schwenkbewegung des ersten Teils des Formenträgers (50a) bedingter erster Öffnungswinkel (α) eine stetig differenzierbare Funktion (73) eines Drehwinkels (w) des Rades ist, ein durch die Schwenkbewegung des zweiten Teils des Formenträgers (50b) bedingter zweiter Öffnungswinkel (β) eine stetig differenzierbare Funktion (74) des Drehwinkels (w) des Rades ist, und die Maxima der beiden Funktionen (73, 74) gegeneinander in Abhängigkeit vom Drehwinkels des Rades (w) versetzt sind.

12. Vorrichtung nach einem der Ansprüche 7 bis 11, wobei der erste Teil (60b) und der zweite Teil (60a) des gemeinsamen Betätigungsmittels (60) eine Kurvenscheibe ist, die den ersten Teil des Formenträgers (50a) und den zweiten Teil des Formenträgers (50b) in eine Schwenkbewegung versetzt.

13. Vorrichtung nach einem der Ansprüche 7 bis 12, wobei der erste Teil (60b) und der zweite Teil (60a) des gemeinsamen Betätigungsmittels (60) ein hydraulisches Mittel ist, das den ersten Teil des Formenträgers (50a) und den zweiten Teil des Formenträgers (50b) in eine Schwenkbewegung versetzt.

14. Vorrichtung nach einem der Ansprüche 7 bis 12, wobei der erste Teil (60b) und der zweite Teil (60a) des gemeinsamen Betätigungsmittels (60) ein Elektromotor ist, der den ersten Teil des Formenträgers (50a) und den zweiten Teil des Formenträgers (50b) in eine Schwenkbewegung versetzt.

15. Vorrichtung nach einem der Ansprüche 7 bis 14, wobei der erste Teil des Formenträgers (50a) und der zweite Teil des Formenträgers (50b) über eine gemeinsame Schwenkachse (51) miteinander verbunden sind.

16. Vorrichtung nach einem der Ansprüche 7 bis 14, wobei der erste Teil des Förmentragers (50a) und der zweite Teil des Förmenträgers (50b) jeweils eine eigene Schwenkachse besitzen.

## Claims

1. Method for inserting a preform (V) into, and for extracting a bottle (H) out of a blowing machine (5), wherein the blowing machine (5) comprises a plurality of at least two-part form carriers (50) arranged at a transport means, the form carriers (50) defining a symmetry plane (S) respectively, wherein the form carriers (50) are opened for extraction of the bottle (H) and also closed after the insertion of the preform (V), with the following steps:
■ that the form carriers (50) with the transport means are rotated regularly at a defined speed to a point of the blowing machine (5) at which the extraction of the bottle (H) and the insertion of the preform (V) is carried out; and
■ that a first part of the form carrier (50a) and a second part of the form carrier (50b) are moved irregularly with respect to the symmetry plane (S);
**characterized by** the following step:
■ that the extraction of the bottle (H) and the insertion of the preform (V) is divided into a plurality of phases, wherein the maximum speed of the swinging movement of the first part of the form carrier (50a) in the transport direction (70) of the transport means is achieved in one phase, which occurs before the phase in which the second part of the form carrier (50b) reaches the maximum speed in the transport direction (70) of the transport means.

2. Method according to Claim 1, wherein the first part of the form carrier (50a) and the second part of the form carrier (50b) are controlled by way of respectively one actuating means (60a, 60b).

3. Method according to Claim 1, wherein the first part of the form carrier (50a) and the second part of the form carrier (50b) are controlled by way of a common actuating means (60).

4. Method according to Claim 3, wherein the common actuating means (60) is divided in two parts, wherein a first part (60b) controls the opening and closing movements of the first part of the form carrier (50a) and of the second part of the form carrier (50b) and a second part (60a) controls the irregular movement with respect to the symmetry plane (S).

5. Method according to Claim 1, wherein the transport means is a wheel at whose circumference the plurality of form carriers (50) is arranged, wherein a first opening angle (α), which is conditioned by the swinging movement of the first part of the form carrier (50a), is a constantly differentiable function (73) of an angle of rotation (ω) of said wheel, a second opening angle (β), which is conditioned by the swinging movement of the second part of said form carrier (50b), is a constantly differentiable function (74) of the angle of rotation (ω) of the wheel, and the maxima of the two functions (73, 74) are mutually offset dependent on the angle of rotation (ω) of said wheel.

6. Apparatus for inserting a preform (V) into and for extracting a bottle (H) out of a blowing machine (5), wherein the blowing machine (5) comprises a plurality of two-part form carriers (50) arranged at a transport means, which define a symmetry plane (S) respectively, wherein a first part of the form carrier (50a) and a second part of the form carrier (50b) perform a shear-like movement for the opening and/or closing, and the first part of the form carrier (50a) and the second part of the form carrier (50b) are assigned at least one actuating means (60, 60a, 60b), which moves the first part of the form carrier (50a) and the second part of the form carrier (50b) irregularly with respect to the symmetry plane (S),
**characterized in that**
at least one actuating means (60, 60a, 60b) is designed such that the first part of the form carrier (50a) and the second part of the form carrier (50b) are individually moveable,
such that the extraction of the bottle (H) and the insertion of the preform (V) is divided into a plurality of phases, wherein the maximum speed of the swinging movement of the first part of the form carrier (50a) in the transport direction (70) of the transport means is reached in one phase, which occurs before the phase in which the second part of the form carrier (50b) reaches the maximum speed in the transport direction (70) of the transport means.

7. Apparatus according to Claim 6, wherein the first part of the form carrier (50a) and the second part of the form carrier (50b) are assigned a common actuating means (60), which moves the first part of the form carrier (50a) and the second part of the form carrier (50b) irregularly with respect to the symmetry plane (S).

8. Apparatus according to Claim 7, wherein the first part of the form carrier (50a) and the second part of the form carrier (50b) are respectively coupled with an actuating means (60a, 60b).

9. Apparatus according to Claim 7, wherein the first part of the form carrier (50a) and the second part of the form carrier (50b) are assigned a common actuating means (60).

10. Apparatus according to Claim 9, wherein the common actuating means (60) comprises two parts, wherein a first part (60b) controls the opening and closing movements of the first part of the form carrier (50a) and of the second part of the form carrier (50b) and a second part (60a) controls the irregular movement with respect to the symmetry plane (S).

11. Apparatus according to Claim 7, wherein the transport means is a wheel on whose circumference the plurality of form carriers (4,50) is arranged, wherein a first opening angle (α), which is conditioned by the swinging movement of the first part of the form carrier (50a), is a constantly differentiable function (73) of an angle of rotation (ω) of said wheel, a second opening angle (β), which is conditioned by the swinging movement of the second part of said form carrier (50b), is a constantly differentiable function (74) of the angle of rotation (ω) of the wheel, and the maxima of the two functions (73, 74) are mutually offset dependent on the angle of rotation (ω) of said wheel.

12. Apparatus according to any of claims 7 to 11, wherein the first part (60b) and the second part (60a) of the common actuating means (60) are cam discs, which put the first part of the form carrier (50a) and the second part of the form carrier (50b) in a swinging movement respectively.

13. Apparatus according to any of claims 7 to 12, wherein the first part (60b) and the second part (60a) of the common actuating means (60} is a hydraulic means, which puts the first part of the form carrier (50a) and the second part of the form carrier (50b) in a swinging movement.

14. Apparatus according to any of claims 7 to 12, wherein the first part (60b) and the second part (60a) of the common actuating means (60) is an electric motor, which puts the first part of the form carrier (50a) and the second part of the form carrier (50b) in a swinging movement.

15. Apparatus according to any of claims 7 to 14, wherein the first part of the form carrier (50a) and the second part of the form carrier (50b) are mutually connected by way of a common swivel axle (51).

16. Apparatus according to any of claims 7 to 14, wherein the first part of the form carrier (50a) and the second part of the form carrier (50b) respectively possess their own swivel axles.

## Revendications

1. Procédé d'insertion d'une préforme (V) dans et d'extraction d'une bouteille (H) d'une machine à souffler (5), dans lequel la machine à souffler (5) comprend une pluralité de supports de formes (50) à au moins deux pièces disposés à un moyen de transport, les supports de formes (50) définissent un plan de symétrie (S) respectivement, étant donné que les supports de formes (50) sont ouverts pour l'extraction de la bouteille (H), puis de la même manière refermés après l'insertion de la préforme (V), avec les étapes suivantes :
■ les supports de formes (50) sont tournés uniformément avec le moyen de transport à une vitesse définie vers un endroit de la machine à souffler (5) auquel l'extraction de la bouteille (H) et l'insertion de la préforme (V) sont effectués ; et
■ une première pièce du support de forme (50a) et une deuxième pièce du support de forme (50b) sont déplacées de façon non uniforme par rapport au plan de symétrie (S) ;
**caractérisé par** l'étape suivante :
■ l'extraction de la bouteille (H) et l'insertion de la préforme (V) sont réparties en plusieurs phases, étant donné que la vitesse maximale du mouvement pivotant de la première pièce du support de forme (50a) dans le sens de transport (70) du moyen de transport est atteinte dans une phase située avant la phase dans laquelle la deuxième pièce du support de forme (50b) atteint la vitesse maximale dans le sens de transport (70) du moyen de transport.

2. Procédé selon la revendication 1, dans lequel la première pièce du support de forme (50a) et la deuxième pièce du support de forme (50b) sont excitées chacune par un moyen d'actionnement (60a, 60b).

3. Procédé selon la revendication 1, dans lequel la première pièce du support de forme (50a) et la deuxième pièce du support de forme (50b) sont excitées par un moyen d'actionnement (60) commun.

4. Procédé selon la revendication 3, dans lequel le moyen d'actionnement (60) commun est divisé en deux éléments, étant donné qu'un premier élément (60b) commande le mouvement d'ouverture et de fermeture de la première pièce du support de forme (50a) et de la deuxième pièce du support de forme (50b) et un deuxième élément (60a) commande le mouvement non uniforme par rapport au plan de symétrie (S).

5. Procédé selon la revendication 1, dans lequel le moyen de transport est une roue sur la périphérie de laquelle sont disposés la pluralité de supports de forme (50), étant donné qu'un premier angle d'ouverture (α) conditionné par le mouvement de pivotement de la première pièce du support de forme (50a) est une fonction continuellement différentiable (73) d'un angle de rotation (ω) de la roue, qu'un deuxième angle d'ouverture (β) conditionné par le mouvement de pivotement de la deuxième pièce du support de forme (50b) est une fonction continuellement différentiable (74) d'un angle de rotation (ω) de la roue, et les maxima des deux fonctions (73, 74) sont décalés l'un par rapport à l'autre en fonction de l'angle de rotation (ω) de la roue.

6. Dispositif d'insertion d'une préforme (V) dans et d'extraction d'une bouteille (H) d'une machine à souffler (5), étant donné que la machine à souffler (5) comprend une pluralité de supports de formes (50) à moins deux pièces disposés à un moyen de transport, les supports de formes (50) définissent un plan de symétrie (S) respectivement, étant donné qu'une première pièce du support de forme (50a) et une deuxième pièce du support de forme (50b) effectuent un mouvement en ciseaux pour l'ouverture et/ou la fermeture, et qu'est affecté à la première pièce du support de forme (50a) et à la deuxième pièce du support de forme (50b) au moins un moyen d'actionnement (60, 60a, 60b) qui déplace de façon non uniforme la première pièce du support de forme (50a) et la deuxième pièce du support de forme (50b) par rapport au plan de symétrie (S),
**caractérisé en ce que**
le au moins un moyen d'actionnement (60, 60a, 60b) est conçu de manière à ce que la première pièce du support de forme (50a) et la deuxième pièce du support de forme (50b) puissent être déplacées individuellement,
de manière à ce que l'extraction de la bouteille (H) et l'insertion de la préforme (V) sont réparties en plusieurs phases, étant donné que la vitesse maximale du mouvement pivotant de la première pièce du support de forme (50a) dans le sens de transport (70) du moyen de transport est atteinte dans une phase située avant la phase dans laquelle la deuxième pièce du support de forme (50b) atteint la vitesse maximale dans le sens de transport (70) du moyen de transport.

7. Dispositif selon la revendication 6, dans lequel est affecté à la première pièce du support de forme (50a) et à la deuxième pièce du support de forme (50b) un moyen d'actionnement (60) commun qui déplace de façon non uniforme la première pièce du support de forme (50a) et la deuxième pièce du support de forme (50b) par rapport au plan de symétrie (S).

8. Dispositif selon la revendication 7, dans lequel la première pièce du support de forme (50a) et la deuxième pièce du support de forme (50b) sont couplées chacune avec un moyen d'actionnement (60a, 60b).

9. Dispositif selon la revendication 7, dans lequel est affecté à la première pièce du support de forme (50a) et à la deuxième pièce du support de forme (50b) un moyen d'actionnement (60) commun.

10. Dispositif selon la revendication 9, dans lequel le moyen d'actionnement (60) commun est divisé en deux éléments, étant donné qu'un premier élément (60b) commande le mouvement d'ouverture et de fermeture de la première pièce du support de forme (50a) et de la deuxième pièce du support de forme (50b) et un deuxième élément (60a) commande le mouvement non uniforme par rapport au plan de symétrie (S).

11. Dispositif selon la revendication 7, dans lequel le moyen de transport est une roue sur la périphérie de laquelle sont disposés la pluralité de supports de forme (4,50), étant donné qu'un premier angle d'ouverture (α) conditionné par le mouvement de pivotement de la première pièce du support de forme (50a) est une fonction continuellement différentiable (73) d'un angle de rotation (ω) de la roue, qu'un deuxième angle d'ouverture (β) conditionné par le mouvement de pivotement de la deuxième pièce du support de forme (50b) est une fonction continuellement différentiable (74) d'un angle de rotation (ω) de la roue, et les maxima des deux fonctions (73, 74) sont décalés l'un par rapport à l'autre en fonction de l'angle de rotation (ω) de la roue.

12. Dispositif selon l'une quelconque des revendications 7 à 11, dans lequel le premier élément (60b) et le deuxième élément (60a) du moyen d'actionnement (60) commun est un disque-came qui amène la première pièce du support de forme (50a) et la deuxième pièce du support de forme (50b) à effectuer un mouvement pivotant.

13. Dispositif selon l'une quelconque des revendications 7 à 12, dans lequel le premier élément (60b) et le deuxième élément (60a) du moyen d'actionnement (60) commun est un moyen hydraulique qui amène la première pièce du support de forme (50a) et la deuxième pièce du support de forme (50b) à effectuer un mouvement pivotant.

14. Dispositif selon l'une quelconque des revendications 7 à 12, dans lequel le premier élément (60b) et le deuxième élément (60a) du moyen d'actionnement (60) commun est un moteur électrique qui amène la première pièce du support de forme (50a) et la deuxième pièce du support de forme (50b) à effectuer un mouvement pivotant.

15. Dispositif selon l'une quelconque des revendications 7 à 14, dans lequel la première pièce du support de forme (50a) et la deuxième pièce du support de forme (50b) sont reliées l'une à l'autre par l'intermédiaire d'un axe de pivotement (51) commun.

16. Dispositif selon l'une quelconque des revendications 7 à 14, dans lequel la première pièce du support de forme (50a) et la deuxième pièce du support de forme (50b) possèdent chacune leur propre axe de pivotement.
